# EUROPEAN PATENT APPLICATION

(11) **EP 1 705 374 A1**
(43) Date of publication of application: **27.09.2006**
(21) Application number: 05075541.2
(22) Date of filing: 04.03.2005
(51) Int. Cl.: F04B 27/10, F04B 39/00, F16C 35/077, F16C 19/30, F16C 19/10

(54) **Anti-friction thrust bearing centering device for airtight refrigeration compressors**

(71) Applicant: Tecumseh do Brasil Ltda., CEP 13565-900 Sao Carlos - SP (BR)
(72) Inventor: Ribeiro, Paschoalino, Marcelo, Sao Carlos, SP (BR)
(74) Representative: Gil-Vega, Victor

(57) **Abstract**

ANTI-FRICTION THRUST BEARING CENTERING DEVICE FOR AIRTIGHT REFRIGERATION COMPRESSORS, essentially consisting of a cylindrical glove (7) of polymeric material, equipped with an internal circular rim and approximately at the middle (8), with an upper face equipped with an equally circular level (9), along its internal border, wherein the mentioned glove (7) is applied in the housing (5) provided for the installation of the anti-friction thrust bearing (1-2-3) of the airtight refrigeration compressor, guided by the external diameter of its axle (4) hub (6), and with the internal rim (8) offering direct support to the track or lower washer (1) of the anti-friction thrust bearing installed there.

## Description

### BACKGROUND OF THE INVENTION

As it is of common knowledge, airtight refrigeration compressors present relative movements between its internal parts, wherein the surfaces that have areas of mutual contact with relative movements are normally denominated as journal bearings.

Referring particularly to journal bearings, they are usually fabricated in melted iron, steel or aluminum alloys; one of the last operations of this fabrication to which they are subjected is a surface treatment that is called phosphatization.

Still on the same matter, a hydrodynamic journal bearing is a machine element normally applied between two rigid pieces and in relative movement, where such hydrodynamic journal bearing possesses a lubricating fluid between the referred rigid pieces, for the purpose of substituting the dry friction between them with viscous friction.

Another type of journal bearing process can be obtained with the use of anti-friction bearings between two contact surfaces, with relative movements between them. Anti-friction thrust bearings are used in some airtight refrigeration compressors, for the purpose of facilitating the displacement between the parts in contact, thus reducing the friction, the working temperature and the premature weariness of the surfaces of the rigid pieces in contact.

It is also of common knowledge that an airtight compressor has radial and axial journal bearings between its central axle and the body housings where it rests on. Since the compressor body is fixed (that is, it has null speed), and its axle rotates with an angular speed imposed by the respective electric motor, thus it has a relative speed between the central axle of the airtight compressor and the places where it rests on (housings).

Some airtight refrigeration compressor models use anti-friction thrust bearings on the contact areas, where these same areas also have the purpose of base and support of rotating parts.

In such airtight refrigeration compressors what happens, during the operation, is that the component parts of its anti-friction thrust bearings, that is, the washers and the spheres cage, can move radially, naturally due to the existing assembly back-lashes. However, to each new start up of the airtight compressor (which is always a critical moment, since the pump has not yet injected the oil), the radial displacement of the component parts of the anti-friction thrust bearing can be intensified, and the washer or its lower track, in this instance, may touch the central axle of the compressor, causing marks and/or undesirable rubbings, thus damaging the axle itself and the anti-friction bearing housing, provoking risks, eventual falling off of chips, and other inconveniences.

### DESCRIPTION OF THE INVENTION

Thus due to the above circumstances, and with the purpose of overcoming them, it is for this reason that the anti-friction thrust bearing centering device for airtight refrigeration compressors was designed, where the purpose of this device is precisely not allowing the component parts of the anti-friction bearing to have radial movements but, on the contrary, maintaining the referred anti-friction bearing perfectly centralized in the respective housing, besides retaining lubricating oil, thus maintaining the spheres cage properly lubricated.

More specifically, the referred centering device is composed by a special glove, made from polymeric material, and guided by the external diameter of the central axle hub of the compressor body, and for the function of guiding and centering the lower track or washer of the anti-friction bearing in the housing which is formed to receive it.

### DESCRIPTION OF THE DRAWINGS

The attached drawings illustrate this invention, in which:
Fig. 1 shows, in perspective, the anti-friction thrust bearing centering device for airtight refrigeration compressors in concern, taken separately;
Fig. 2 is a top view of the anti-friction thrust bearing centering device of Fig.1;
Fig. 3 is a cross-sectional cut view indicated as A-A in Fig. 2; and
Fig. 4 is partial cut view, and with an enlarged detail, of an airtight refrigeration compressor, with the anti-friction thrust bearing equipped with the centering device in question.

### DETAILED DESCRIPTION

In accordance with what the related figures above illustrate, the anti-friction thrust bearing for airtight refrigeration compressors, for which the centering device was designed, object of this invention, is of the type composed by a pair of support washers or tracks (Fig. 4), lower 1 and upper 2 respectively, between which the merged spheres cage 3 lies; this anti-friction bearing is mounted naturally around the central axle 4 of the airtight refrigeration compressor to which it is destined for, in the housing 5 formed within its interior, immediately adjacent to the internal extremity of the respective hub 6.

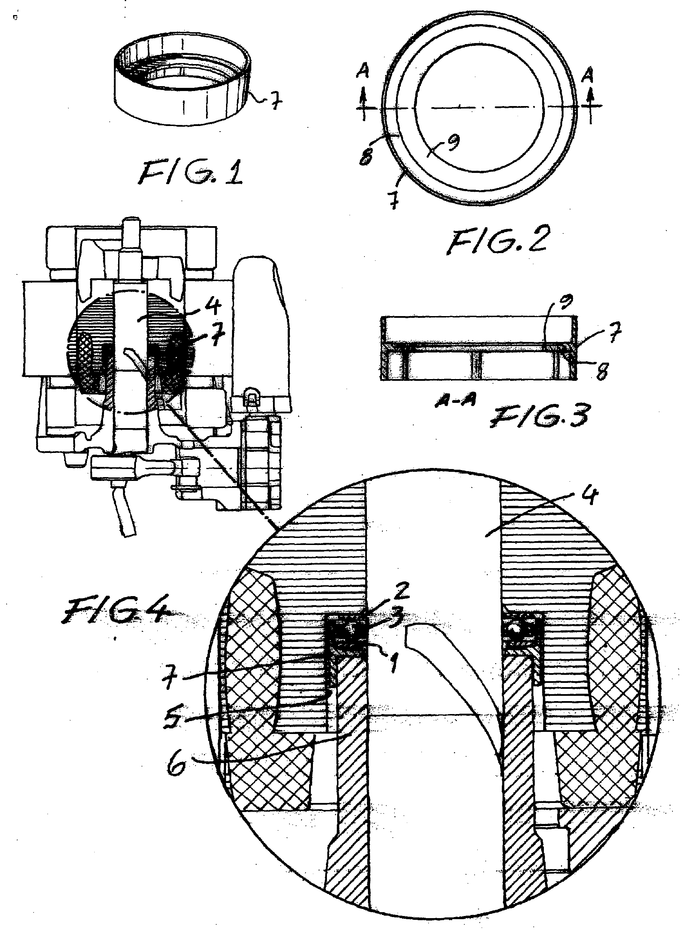

In reference with said anti-friction bearing centering device, which constitutes the object of this invention, it is formed by a rectilinear cylindrical glove 7 (Figs. 1, 2 and 3), made from polymeric material, and equipped with an internal circular rim 8, approximately to the mid-level, and with an upper face equipped with an equally light circular level 9, along the internal border, wherein the mentioned glove 7 is applied naturally in the housing 5 provided for the anti-friction thrust bearing to which it is destined for, guided by the external diameter of the axle hub 6 of the compressor, and with its internal circular rim 8 offering direct support for the track or lower washer 1 of the referred anti-friction thrust bearing.

As a whole, constituted and mounted in the interior of an airtight refrigeration compressor (Fig. 4), that is, the anti-friction thrust bearing is laid internally to the centering device glove 7, stably applied, at the same time, at the extremity of the that axle 4 hub 6, it is exactly the referred glove 7 that maintains the anti-friction bearing properly centered in the respective housing 5, impeding any radial displacements of its components, at the same time, retaining lubricating oil in its interior, thus assuring the maintenance of the spheres cage 3 properly lubricated.

It also needs to be pointed out that the use of the anti-friction thrust bearing centering device of the present invention, besides facilitating the mounting of the anti-friction thrust bearing itself, allows, at the instance of the compressor startup, and even with little lubricating oil in the system, the sliding between the areas of contact is made easy by the lubricating oil that is held in the centering device, at the same time that any radial displacement of the components of the anti-friction thrust bearing are eliminated.

## Claims

1. ANTI-FRICTION THRUST BEARING CENTERING DEVICE FOR AIRTIGHT REFRIGERATION COMPRESSORS, **characterized** as consisting of essentially by a rectilinear cylindrical glove (7), made from polymeric material, and equipped with an internal circular rim (8), approximately at mid-level, and with the upper face equipped with an equally light circular level (9), along its internal border, wherein the mentioned glove (7) is applied in the internal housing (5) provided for the installation of the anti-friction thrust bearing (1-2-3) of the airtight refrigeration compressor to which it is destined for, guided by the external diameter of its axle (4) hub (6), and with its internal circular rim (8) offering direct support to the track or lower washer (1) of the referred anti-friction thrust bearing properly installed there.
